# EUROPÄISCHE PATENTANMELDUNG

(11) **EP 4 195 098 A1**
(43) Veröffentlichungstag der Anmeldung: **14.06.2023**
(21) Anmeldenummer: 22204970.2
(22) Anmeldetag: 02.11.2022
(51) Int. Cl.: G06K 19/077, H01Q 9/16, H01Q 21/26, F16L 11/12, G09F 3/20

(54) **IDENTIFIKATIONSELEMENT, VORZUGSWEISE FÜR MEDIENFÜHRUNGEN**

(30) Priorität: 08.12.2021 DE 102021213951
(71) Anmelder: ContiTech Techno-Chemie GmbH, 61184 Karben (DE)
(72) Erfinder: Brühne, Klaus, 30165 Hannover (DE); Borchert, Lukas, 30165 Hannover (DE)
(74) Vertreter: Continental Corporation

(57) **Zusammenfassung**

Die vorliegende Erfindung betrifft ein Identifikationselement (1), vorzugsweise für Medienführungen (2), mit wenigstens einem Transponder (10), mit wenigstens einer ersten Antenne (11), welche signalübertragend mit dem Transponder (10) verbunden ist und sich zumindest im Wesentlichen, vorzugsweise geradlinig, von dem Transponder (10) weg erstreckt, und mit wenigstens einer zweiten Antenne (12), welche signalübertragend mit dem Transponder (10) verbunden ist und sich zumindest im Wesentlichen, vorzugsweise geradlinig, von dem Transponder (10) weg erstreckt. Das Identifikationselement (1) ist gekennzeichnet durch wenigstens eine dritte Antenne (13), welche signalübertragend mit dem Transponder (10) verbunden ist und sich zumindest im Wesentlichen, vorzugsweise geradlinig, von dem Transponder (10) weg erstreckt.

## Beschreibung

Die vorliegende Erfindung betrifft ein Identifikationselement gemäß dem Oberbegriff des Patentanspruchs 1 sowie eine Medienführung mit einem derartigen Identifikationselement gemäß dem Patentanspruch 6.

Zum Transport bzw. zur Führung von Medien wie insbesondere von Fluiden ist die Verwendung von Medienführungen bzw. von Medienleitungen beispielsweise in Form von Rohren bzw. Schläuchen bekannt. Zu den Fluiden gehören neben Flüssigkeiten auch Gase oder pastöse Stoffe. Mehrere Rohre bzw. Schläuche können dabei untereinander über Rohrkupplungen bzw. Schlauchkupplungen miteinander verbunden werden, welche jeweils an dem entsprechenden offenen Ende fest an dem jeweiligen Rohr bzw. Schlauch angeordnet sind. Über derartige Rohrkupplungen bzw. Schlauchkupplungen können Rohre bzw. Schläuche ebenfalls mit Aggregaten verbunden werden, welche ihrerseits eine entsprechende Kupplung aufweisen. Rohre werden dabei aufgrund der verwendeten Marialien, beispielsweise Metall oder Kunststoff, als vergleichsweise steife, starre bzw. unflexible Medienleitungen angesehen, wohingegen Schläuche aufgrund ihres relativ einfache bzw. deutlich biegsamen Materials, beispielsweise Elastomer, flexible Medienleitungen darstellen.

Es ist bekannt, derartige Medienleitungen mit elektronischen Identifikationselementen zu versehen. Dies kann beispielsweise der eindeutigen Identifikation einer einzelnen Medienleitung während der Produktion aber auch bei der Verwendung dienen. Dies kann beispielsweise für die eindeutige Zuordnung während der Montage bzw. bei der Verwendung nützlich sein, um eine bestimmte Medienleitung von anderen gleichen Medienleitungen unterscheiden zu können.

Dies kann auch der Wartung während der Verwendung dienen. Auch kann dies mit weiteren Möglichkeiten wie beispielsweise der Zuordnung einer Verschleißstelle, einer Beschädigung und dergleichen verwendet werden.

Als derartige elektronische Identifikationselemente können beispielsweise Transponder verwendet werden, welche von außen mittels eines elektromagnetischen Feldes aktiviert, d.h. zum Senden von gespeicherten Informationen, angeregt und ggfs. hierdurch auch gleichzeitig mit der zum Senden erforderlichen elektrischen Energie versorgt werden können. Es können auf diese Art und Weise auch Informationen auf dem Transponder geändert bzw. gespeichert werden. Ein derartiger Transponder kann beispielsweise ein RFID-Chip (radio-frequency identification) sein.

Hierzu können derartige Transponder als separate elektronische Bauteile bzw. Baugruppen, beispielsweise als RFID-Chips, samt entsprechender Antenne in einer Lage bzw. zwischen die Lagen eines Rohres bzw. eines Schlauches eingebettet werden. Auch können derartige Transponder samt entsprechender Antenne an Garnen bzw. in Garne oder dergleichen vorgesehen und samt der Garne zum Beispiel in gewobene Festigkeitsträgerschichten in Rohre bzw. in Schläuche eingebracht werden. In jedem Fall ist es dabei üblich, den Transponder des Identifikationselements mit einer Antenne zu verbinden, welche sich länglich vom Transponder weg erstreckt. Es ist auch bekannt, dass sich zwei Antennen diametral gegenüberliegend und üblicherweise geradlinig vom Transponder weg strecken.

Nachteilig hieran ist, dass wenn derartige Identifikationselemente in Bauteile eingebracht bzw. auf Bauteile aufgebracht werden, die Gefahr bestehen kann, dass die Antenne beschädigt wird bzw. die Antennen beschädigt werden. Auch kann es hierbei vorkommen, dass die Antenne bzw. die Antennen durchtrennt bzw. vollständig abgetrennt wird bzw. werden. Dies kann entsprechend zu einer Reduzierung der Sende-/Empfangsleistung oder sogar zu einem vollständigen Ausfall des Sendens und Empfangens führen.

Eine Aufgabe der vorliegenden Erfindung ist es, ein Identifikationselement, vorzugsweise für Medienführungen, der eingangs beschriebenen Art bereit zu stellen, so dass die Verfügbarkeit der Funktion des Sendens und Empfangens erhöht oder sogar sichergestellt werden kann. Dies soll möglichst einfach und bzw. oder kostengünstig erfolgen. Zumindest soll eine Alternative zu bekannten derartigen Identifikationselementen, vorzugsweise für Medienführungen, geschaffen werden.

Die Aufgabe wird erfindungsgemäß durch ein Identifikationselement mit den Merkmalen gemäß Patentanspruch 1 sowie durch eine Medienführung mit den Merkmalen gemäß Patentanspruch 6 gelöst. Vorteilhafte Weiterbildungen sind in den Unteransprüchen beschrieben.

Somit betrifft die vorliegende Erfindung ein Identifikationselement, vorzugsweise für Medienführungen, mit wenigstens einem Transponder, mit wenigstens einer ersten Antenne, welche signalübertragend mit dem Transponder verbunden ist und sich zumindest im Wesentlichen, vorzugsweise geradlinig, von dem Transponder weg erstreckt, und mit wenigstens einer zweiten Antenne, welche signalübertragend mit dem Transponder verbunden ist und sich zumindest im Wesentlichen, vorzugsweise geradlinig, von dem Transponder weg erstreckt.

Das Identifikationselement ist gekennzeichnet durch wenigstens eine dritte Antenne, welche signalübertragend mit dem Transponder verbunden ist und sich zumindest im Wesentlichen, vorzugsweise geradlinig, von dem Transponder weg erstreckt.

Hierdurch können die Sende-/Empfangsmöglichkeiten des Identifikationselements bzw. dessen Transponders verbessert bzw. erhöht werden, da mehr Antennen als bisher bekannt zum Senden und bzw. oder Empfangen genutzt werden können. Dies kann auch die Anzahl der Richtungen erhöhen, in welche gesendet bzw. aus welchen empfangen werden kann.

Zusätzlich oder alternativ kann die Wahrscheinlichkeit eines Ausfalls der Sende-/Empfangsmöglichkeiten des Identifikationselements bzw. dessen Transponders, insbesondere durch Beschädigungen bei der Montage, reduziert werden, da mehr Antennen als bisher bekannt vorhanden bzw. übrig sein können, um auch beim Ausfall wenigstens einer Antenne noch ein Senden und bzw. oder Empfangen mittels der verbleibenden Antenne bzw. Antennen zu ermöglichen.

Gemäß einem Aspekt der Erfindung weist das Identifikationselement wenigstens eine vierte Antenne auf, welche signalübertragend mit dem Transponder verbunden ist und sich zumindest, vorzugsweise geradlinig, im Wesentlichen von dem Transponder weg erstreckt. Hierdurch können die zuvor beschriebenen Merkmale bzw. Eigenschaften weiter erhöht bzw. verstärkt werden. Insbesondere der Ausfallschutz weiter verbessert werden. Dies gilt entsprechend für mehr als vier Antennen.

Gemäß einem weiteren Aspekt der Erfindung sind die Antennen innerhalb einer gemeinsamen Ebene angeordnet und um den Transponder in der Umfangsrichtung herum gleichmäßig zueinander beabstandet. Dies kann einen kompakten Aufbau sowie eine vergleichsweise gute Sende- und Empfangsleistung ermöglichen.

Gemäß einem weiteren Aspekt der Erfindung sind wenigstens zwei Antennen redundant ausgebildet. Dies schließt ein, dass der Transponder ausgebildet ist, wenigstens zwei Antennen redundant zu betreiben. In jedem Fall kann dies den Ausfallschutz der Sende-/Empfangsmöglichkeiten des Identifikationselements bzw. dessen Transponders verbessern.

Gemäß einem weiteren Aspekt der Erfindung ist der Transponder ein RFID-Chip. Hierdurch können die Eigenschaften und Vorteile eines RFID-Transponders bzw. eines RFID-Chips bei den beiden erfindungsgemäßen Identifikationselementen umgesetzt und genutzt werden.

Die vorliegende Erfindung betrifft auch eine Medienführung, vorzugsweise ein Rohr, einen Schlauch, eine Rohrkupplung oder eine Schlauchkupplung, mit wenigstens einem Identifikationselement wie zuvor beschrieben. Hierdurch kann das erfindungsgemäße Identifikationselement bei einer derartigen Medienführung angewendet werden, so dass die entsprechenden Eigenschaften und Vorteile dort umgesetzt und genutzt werden können.

Mehrere Ausführungsbeispiele und weitere Vorteile der Erfindung werden nachstehend im Zusammenhang mit den folgenden Figuren erläutert. Darin zeigt:
- Fig. 1: eine schematische Darstellung eines erfindungsgemäßen Identifikationselements gemäß eines ersten Ausführungsbeispiels; und
- Fig. 2: eine schematische Darstellung eines erfindungsgemäßen Identifikationselements gemäß eines zweiten Ausführungsbeispiels.

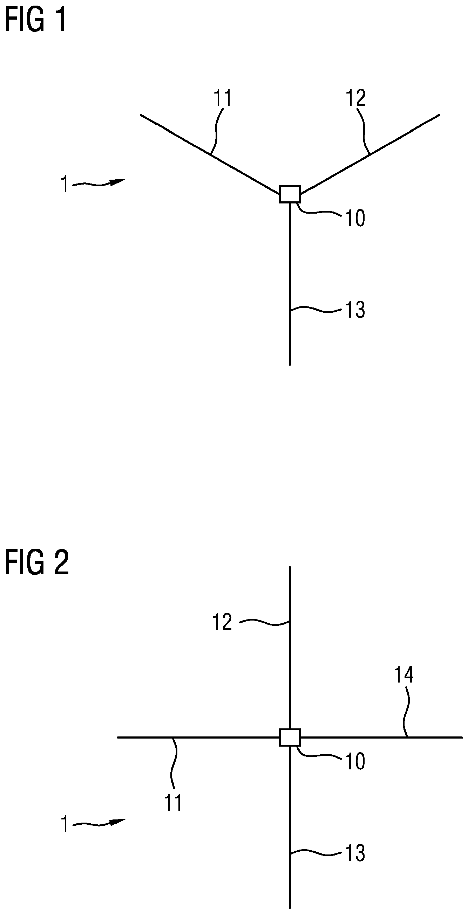

Fig. 1 zeigt eine schematische Darstellung eines erfindungsgemäßen Identifikationselements 1 gemäß eines ersten Ausführungsbeispiels. Das Identifikationselement 1 weist einen Transponder 10 in Form eines RFID-Chips 10 auf, welcher mit einer ersten Antenne 11, mit einer zweiten Antenne 12 sowie mit einer dritten Antenne 13 signalübertragend verbunden ist. Die drei Antennen 11, 12, 13 erstrecken sich geradlinig von dem RFID-Chip 10 weg. Die drei Antennen 11, 12, 13 sind in der Umfangsrichtung um den RFID-Chip 10 als gemeinsamen Mittelpunkt herum gleichmäßig zueinander beabstandet, d.h. jeweils in einem Winkel von 120° zueinander angeordnet.

Die drei Antennen 11, 12, 13 sind redundant zueinander ausgebildet, d.h. die drei Antennen 11, 12, 13 sind gleich ausgebildet. Ferner ist der RFID-Chip 10 ausgebildet, alle drei Antennen 11, 12, 13 gleich zum Senden und zum Empfangen zu nutzen. Entsprechend kann seitens des Transponders 10 auch ein Senden und Empfangen erfolgen, falls lediglich zwei oder sogar nur noch eine der drei Antennen 11, 12, 13 funktionsfähig ist.

Fig. 2 zeigt eine schematische Darstellung eines erfindungsgemäßen Identifikationselements 1 gemäß eines zweiten Ausführungsbeispiels. In diesem Fall ist ferner eine vierte Antenne 14 signalübertragend mit dem RFID-Chip 10 wie zuvor beschrieben verbunden und ausgebildet. Auch in diesem Fall sind die drei Antennen 11, 12, 13 in der Umfangsrichtung um den RFID-Chip 10 als gemeinsamen Mittelpunkt herum gleichmäßig zueinander beabstandet, d.h. jeweils in einem Winkel von 90° zueinander angeordnet.

### Bezugszeichenliste (Teil der Beschreibung)

- 1: Identifikationselement
- 10: Transponder; RFID-Chip
- 11: erste Antenne
- 12: zweite Antenne
- 13: dritte Antenne
- 14: vierte Antenne

## Patentansprüche

1. Identifikationselement (1), vorzugsweise für Medienführungen (2),
mit wenigstens einem Transponder (10),
mit wenigstens einer ersten Antenne (11), welche signalübertragend mit dem Transponder (10) verbunden ist und sich zumindest im Wesentlichen, vorzugsweise geradlinig, von dem Transponder (10) weg erstreckt, und mit wenigstens einer zweiten Antenne (12), welche signalübertragend mit dem Transponder (10) verbunden ist und sich zumindest im Wesentlichen, vorzugsweise geradlinig, von dem Transponder (10) weg erstreckt, **gekennzeichnet durch**
wenigstens eine dritte Antenne (13), welche signalübertragend mit dem Transponder (10) verbunden ist und sich zumindest im Wesentlichen, vorzugsweise geradlinig, von dem Transponder (10) weg erstreckt.

2. Identifikationselement (1) nach Anspruch 1, **gekennzeichnet durch** wenigstens eine vierte Antenne (14), welche signalübertragend mit dem Transponder (10) verbunden ist und sich zumindest im Wesentlichen, vorzugsweise geradlinig, von dem Transponder (10) weg erstreckt.

3. Identifikationselement (1) nach Anspruch 1 oder 2, **dadurch**
**gekennzeichnet, dass**
die Antennen (11, 12, 13, 14) innerhalb einer gemeinsamen Ebene angeordnet und um den Transponder (10) in der Umfangsrichtung (U) herum gleichmäßig zueinander beabstandet sind.

4. Identifikationselement (1) nach einem der vorangehenden Ansprüche,
**dadurch gekennzeichnet, dass**
wobei wenigstens zwei Antennen (11, 12, 13, 14) redundant ausgebildet sind.

5. Identifikationselement (1) nach einem der vorangehenden Ansprüche,
**dadurch gekennzeichnet, dass**
der Transponder (10) ein RFID-Chip (10) ist.

6. Medienführung (2), vorzugsweise Rohr (2), Schlauch (2), Rohrkupplung (2) oder Schlauchkupplung (2),
mit wenigstens einem Identifikationselement (1) nach einem der vorangehenden Ansprüche.
